# EUROPÄISCHE PATENTSCHRIFT

(11) **EP 2 906 871 B1**
(45) Veröffentlichungstag und Bekanntmachung des Hinweises auf die Patenterteilung: **01.05.2019**
(21) Anmeldenummer: 13791726.6
(22) Anmeldetag: 13.09.2013
(51) Int. Cl.: F21S 41/39, F21S 41/147

(54) **LICHTMODUL MIT ZWEI ODER MEHR REFLEKTOREN FÜR EIN KRAFTFAHRZEUG**
LIGHT MODULE WITH TWO OR MORE REFLECTORS FOR A MOTOR VEHICLE
MODULE D'ÉCLAIRAGE COMPORTANT AU MOINS DEUX RÉFLECTEURS POUR UN VÉHICULE AUTOMOBILE

(30) Priorität: 09.10.2012 AT 10942012
(43) Veröffentlichungstag der Anmeldung: 19.08.2015
(73) Patentinhaber: ZKW Group GmbH, 3250 Wieselburg (AT)
(72) Erfinder: BAUER, Friedrich, 3252 Bergland (AT); MEJTA, Peter, 3251 Purgstall/Erlauf (AT)
(74) Vertreter: Patentanwaltskanzlei Matschnig & Forsthuber OG
(86) Internationale Anmeldenummer: PCT/AT2013/050183
(87) Internationale Veröffentlichungsnummer: WO 2014/056012

(56) Entgegenhaltungen:
- EP-A1- 1 138 593
- WO-A1-2005/032883
- WO-A1-2012/048351
- DE-A1- 10 156 240
- US-A- 3 870 876
- US-A- 6 030 101

## Beschreibung

Die Erfindung betrifft ein Lichtmodul für ein Kraftfahrzeug bzw. für einen Kraftfahrzeug-Scheinwerfer, wobei das Lichtmodul zumindest zwei oder mehrere Lichtquellen aufweist, welche in definierten Positionen zueinander positioniert sind, und wobei das Lichtmodul weiters zwei oder mehr Reflektoren aufweist, wobei jeder Lichtquelle zumindest ein Reflektor zugeordnet ist, wobei zumindest einer der Reflektoren mit zumindest einem benachbarten Reflektor beweglich verbunden ist, wobei die beweglich miteinander verbundenen Reflektoren mittels zumindest eines Scharnieres miteinander verbunden sind, das eine oder die mehreren Scharniere einstückig mit den Reflektoren ausgebildet ist/sind, und das eine oder die mehreren Scharniere als Filmscharniere ausgebildet sind.

Weiters betrifft die Erfindung einen Fahrzeugscheinwerfer mit einem oder mehreren solchen Lichtmodulen.

Häufig sind auf einer LED-Platine zwei oder mehrere voneinander unabhängige LED-Lichtquellen vorgesehen, wobei jeder LED-Lichtquelle ein eigener Reflektor zugeordnet ist. Aus logistischen und lagerungstechnischen Gründen werden für solche Anwendungen häufig Doppel- oder Mehrfachreflektoren verwendet. Durch die Ausgestaltung von zwei oder mehreren Reflektoren in einem Bauteil kann der logistische Aufwand deutlich verringert werden. Auch lässt sich auf diese Weise eine Kostenersparnis realisieren, da nur ein Werkzeug gebaut werden muss.

Häufig ist es auf Grund optischer Anforderungen notwendig, dass jede LED-Lichtquelle in Bezug zu ihrem Reflektor referenziert, also entsprechend positioniert und/oder ausgerichtet wird.

Bei Doppel- oder Mehrfachreflektoren ist es allerdings nur möglich, einen der Reflektoren in Bezug auf sein LED-Lichtquelle zu referenzieren, während die Position der anderen Reflektoren dann von der Position dieses referenzierten Reflektors bestimmt wird. Ein Referenzieren aller Reflektoren zu ihren LED-Lichtquellen ist entsprechend nicht möglich.

Darüber hinaus sind Konstruktionen bekannt (siehe z.B. US 6 030 101 A, DE10156240 A1), welche zwar eine flexible Verbindung der Reflektoren zueinander realisieren, aber keine individuelle Referenzierung der Reflektoren in Bezug auf die zugehörigen LED-Lichtquellen ermöglichen, weil diese LED-Lichtquellen immer auf dem jeweiligen Reflektor fixiert sind.

Eine Bestückung der LED-Platine mit den LED-Lichtquellen nach dem Anbringen der Doppel- oder Mehrfachreflektoren, also ein Referenzieren der LED-Lichtquellen zu den Reflektoren (und nicht umgekehrt) stellt einen in der Praxis nicht verwendbaren Ansatz dar. Dementsprechend kommen häufig in der Praxis Einzelreflektoren zum Einsatz, oder es erfolgt keine Referenzierung der einzelnen Reflektoren sondern eine Einstellung am Fertigungsband über die Optik/Lichttechnik, d.h. die Reflektoren werden in eine Position gebracht, welche das gewünschte Lichtbild erzeugt und in dieser Position werden die Reflektoren fixiert. Dazu sind allerdings aufwendige Verstellmechaniken und Einstellanlagen notwendig, die häufig auch sehr fehlerbehaftet sind.

Es ist eine Aufgabe der Erfindung, ein optimales Referenzieren von zwei oder mehreren Reflektoren in Bezug zu der ihnen jeweils zugeordneten Lichtquelle zu ermöglichen, wobei gleichzeitig Logistik und Lagerhaltung gegenüber der Verwendung von Einzelreflektoren deutlich vereinfacht werden soll.

Diese Aufgabe wird mit einem Lichtmodul gemäß Anspruch 1 dadurch gelöst, dass erfindungsgemäß die beweglich verbundenen Reflektoren unabhängig voneinander positioniert und zu der ihnen jeweils zugeordneten Lichtquelle referenziert werden können, und die Lichtquellen LED-Lichtquellen sind, welche LED-Lichtquellen auf einer Trägerplatte angeordnet sind, und reflektorseitige und ihnen korrespondierende trägerplattenseitige Referenzierelemente zum Positionieren/Referenzieren der beweglich verbundenen Reflektoren hinsichtlich der ihnen jeweils zugeordneten, auf der Trägerplatte angeordneten Lichtquelle vorgesehen sind.

Erfindungsgemäß wird ein Doppel- oder Mehrfachreflektor geschaffen, bei dem zumindest zwei Reflektoren beweglich, also flexibel miteinander verbunden sind, sodass zumindest diese beiden Reflektoren in einem gewissen Ausmaß unabhängig von einander positioniert und somit auch optimal zu den ihnen jeweils zugeordneten Lichtquellen referenziert werden können.

Von Vorteil ist es, wenn zumindest ein Reflektor mit allen benachbarten Reflektoren beweglich verbunden ist. Beispielsweise wäre bei drei Reflektoren der "mittlere" Reflektor mit beiden benachbarten Reflektoren beweglich verbunden.

Von besonderem Vorteil ist es, wenn jeder Reflektor mit seinen benachbarten Reflektoren beweglich verbunden ist. Bei n Reflektoren ergeben sich dann (n - 1) bewegliche Verbindungen zwischen den n Reflektoren.

Auf diese Weise kann jeder Reflektor referenziert werden.

Bei einer konkreten Ausführungsform der Erfindung ist dabei vorgesehen, dass die zueinander beweglichen Reflektoren seitlich nebeneinander angeordnet sind, d.h. die Ebene(n), in welcher die Reflektoren positioniert werden, liegen - in Einbaulage des Lichtmoduls - typischerweise im Wesentlichen horizontal. Typischerweise liegen alle Reflektoren (und Lichtquellen) in einer Ebene, es können aber auch zwei oder mehrere, vorzugsweise parallele Ebenen vorgesehen sein.

Der Begriff "seitlich" nebeneinander bezieht sich dabei auf die Ebene(n), in welcher bzw. in welchen die Reflektoren angeordnet sind (im Folgenden wird nur von "der" Ebene gesprochen, obwohl auch parallele Ebenen gemeint sein können). Wenn diese Ebene, die in der Regel von einer LED-Platine gebildet ist, horizontal liegt, so liegen die Reflektoren tatsächlich seitlich nebeneinander. Wird die LED-Platine beispielsweise um 90° zur Horizontalen, also vertikal liegend eingebaut, so sind die Reflektoren in Bezug auf die Platine immer noch "seitlich" nebeneinander angeordnet, in Einbaulage liegen sie aber übereinander. Dies soll natürlich von dem Begriff "seitlich" mit umfasst sein.

Vorzugsweise sind dabei die miteinander verbundenen Reflektoren in einer Ebene zueinander beweglich angeordnet. Diese Ebene ist dabei vorzugsweise jene Ebene (oder parallel dazu), in welcher die Reflektoren befestigt sind, oder diese Ebene ist parallel zu den Ebenen, in welchen die Reflektoren befestigt sind.

Dabei bedeutet der Ausdruck "in einer Ebene" beweglich gelagert, dass - bei (gedanklich) in dieser Ebene fixiertem ersten Reflektor der oder die anderen beweglich an diesem ersten Reflektor angebrachten Reflektoren nur noch parallel zu dieser Ebene verstellt / verschoben werden können, in jenem Ausmaß, welches die Verbindung zwischen der Reflektoren zulässt. Eine Relativbewegung der Reflektoren normal auf diese Ebene in geringem Ausmaß kann möglich sein.

Dies ist eine konkrete Ausführungsform, bei welcher die Reflektoren parallel zu der oben angesprochenen Ebene beweglich zueinander sind, normal zu dieser Ebene ist keine oder nur eine geringe Bewegung möglich.

Es kann aber auch bewusst vorgesehen werden, dass zusätzlich auch eine Bewegung in Richtung normal zu dieser Ebene möglich ist, oder überhaupt nur eine Bewegung in dieser Richtung möglich ist. So wäre eine Reflektorkette denkbar, in welcher manche Reflektoren parallel zu der LED-Platine verstellbar zueinander sind, während andere Reflektoren dazu normal zueinander beweglich sind. Dies wäre etwa bei einer treppenartigen Anordnung der Reflektoren denkbar.

Grundsätzlich lassen sich somit Anordnungen realisieren, bei welchen die Reflektoren seitlich nebeneinander und/oder schräg zueinander und/oder übereinander bzw. untereinander angeordnet sind.

Bei einer einfachen Realisierung der Erfindung sind hingegen alle beweglichen Reflektoren in einer gemeinsamen Ebene beweglich gelagert.

Erfindungsgemäß ist vorgesehen, dass beweglich miteinander verbundene Reflektoren mittels zumindest eines Scharnieres miteinander verbunden sind.

Um die Stabilität der flexiblen Verbindung zu erhöhen, sind beweglich miteinander verbundene Reflektoren vorzugsweise mittels zweier oder mehrerer, vorzugsweise mittels genau zweier Scharniere miteinander verbunden.

Beispielsweise ist dabei vorgesehen, dass die zumindest zwei Scharniere zu einer Ebene, in welcher die Reflektoren zueinander beweglich sind, unterschiedliche Normalabstände aufweisen. Für den Fall, dass die oben genannte Ebene beispielsweise horizontal liegt, liegen dann die Scharniere übereinander.

Vorzugsweise ist das eine bzw. sind die mehreren Scharniere als Kunststoffscharnier bzw. als Kunststoffscharniere ausgebildet.

Für eine einfache Herstellung und für die Stabilität des Doppel- bzw. Mehrfachreflektors ist das eine oder die mehreren Scharniere einstückig mit den Reflektoren ausgebildet.

Erfindungsgemäß ist/sind das eine oder die mehreren Scharniere als ein Filmscharnier bzw. als Filmscharniere ausgebildet.

Bei einer konkreten Ausführungsform der Erfindung ist vorgesehen, dass die Reflektoren als Kunststoffreflektoren ausgebildet sind. Insbesondere diese Ausführungsform ist für eine einstückige Fertigung des gesamten erfindungsgemäßen Zwei- oder Mehrfachreflektors geeignet.

Von besonderer Bedeutung ist die vorliegende Erfindung für Lichtmodule, bei welchen die zumindest eine Lichtquelle eine LED-Lichtquelle ist, wobei jede LED-Lichtquelle ein oder mehrere Leuchtdioden umfasst. Insbesondere bei LED-Lichtquellen ist ein exaktes Referenzieren der Reflektoren zu den Lichtquellen von Bedeutung.

Zum Positionieren/Referenzieren und/oder Befestigen der Reflektoren an der Trägerplatte weisen die Reflektoren an ihren im befestigten Zustand einer Trägerplatte für die LED-Lichtquellen zugewandten Seiten Befestigungselemente und/oder Referenzierelemente auf, mittels welchen die Reflektoren an korrespondierenden Befestigungselementen bzw. Referenzierelementen der Trägerplatte positionierbar sind.

Beispielsweise sind die Befestigungselemente und/oder Referenzierelemente der Reflektoren als (von den Reflektoren) abstehende Stifte ausgebildet.

Die Befestigungselemente und/oder Referenzierelemente an der Trägerplatte sind vorzugsweise als zu den abstehenden Stiften korrespondierende Bohrungen, vorzugsweise als Durchgangsbohrungen ausgebildet.

Im Folgenden ist die Erfindung an Hand der Zeichnung näher erörtert. In dieser zeigt
Fig. 1 die erfindungswesentlichen Bestandteile eines Lichtmoduls in einer perspektivischen Ansicht,
Fig. 2 den Doppelreflektor aus Figur 1 auf einer Trägerplatte für zwei LED-Lichtquellen,
Fig. 3 eine detaillierte Ansicht der Reflektoren bzw. des Doppelreflektors eines Lichtmoduls aus Figur 1,
Fig. 4 zwei Reflektoren im Bereich ihrer flexiblen Verbindung,
Fig. 5 die Darstellung auf Figur 4 in einer Ansicht von Vorne,
Fig. 6 den Doppelreflektor in einer perspektivischen Ansicht von Unten,
Fig. 7 eine unbestückte Trägerplatte mit Sicht auf deren Bohrungen, und
Fig. 8 eine Trägerplatte für die LED-Lichtquellen mit positioniertem Doppelreflektor in einer Ansicht von Unten.

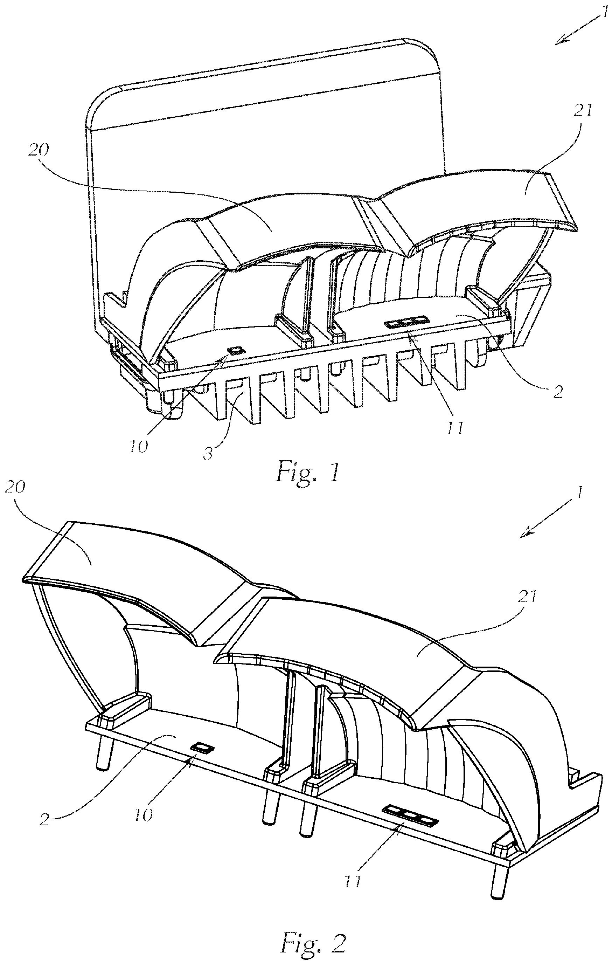

Figur 1 zeigt ein Lichtmodul 1 für ein Kraftfahrzeug bzw. für einen Kraftfahrzeug-Scheinwerfer, wobei in den Figuren nur die erfindungsrelevanten Bestandteile dargestellt sind.

In der gezeigten Ausführungsform weist das Lichtmodul 1 zwei Lichtquellen 10, 11 auf, wobei es sich bei den beiden Lichtquellen um LED-Lichtquellen handelt. Eine der beiden LED-Lichtquelle 10 umfasst in diesem Beispiel eine LED, während die andere LED-Lichtquelle 11 über drei LEDs umfasst.

Beispielsweise dient die LED-Lichtquelle 10 zur Erzeugung einer ersten Lichtverteilung (oder eines ersten Teiles einer Lichtverteilung) während die LED-Lichtquelle 11 der Erzeugung einer zweiten Lichtverteilung (oder eines zweiten Teiles einer Lichtverteilung) dient.

Die beiden LED-Lichtquellen 10, 11 sind in definierten Positionen zueinander positioniert, und jeder der beiden LED-Lichtquellen 10, 11 ist ein Reflektor 20, 21 zugeordnet, über welchen das von der ihm zugeordneten LED-Lichtquelle 10, 11 austretende Licht in den Außenraum ausgestrahlt wird.

Die LED-Lichtquellen 10, 11 sind dabei auf einer Trägerplatte 2 angebracht, bei der es sich um eine LED-Platine 2 handelt. Die LED-Platine 2 selbst ist auf einem Kühlkörper 3 angebracht, beispielsweise werden Platine 2 und Kühlkörper 3 miteinander verklebt.

Erfindungsgemäß bilden nun die beiden Reflektoren 20, 21 einen Doppelreflektor, indem sie miteinander beweglich verbunden sind. Der Doppelreflektor ist in Figur 2 noch einmal in einer anderen Ansicht zusammen mit der Platine 2 dargestellt.

Bei der der dargestellten Ausführungsform sind die beiden Reflektoren 20, 21 seitlich nebeneinander angeordnet und sind dementsprechend in ihren Seitenbereichen miteinander beweglich verbunden.

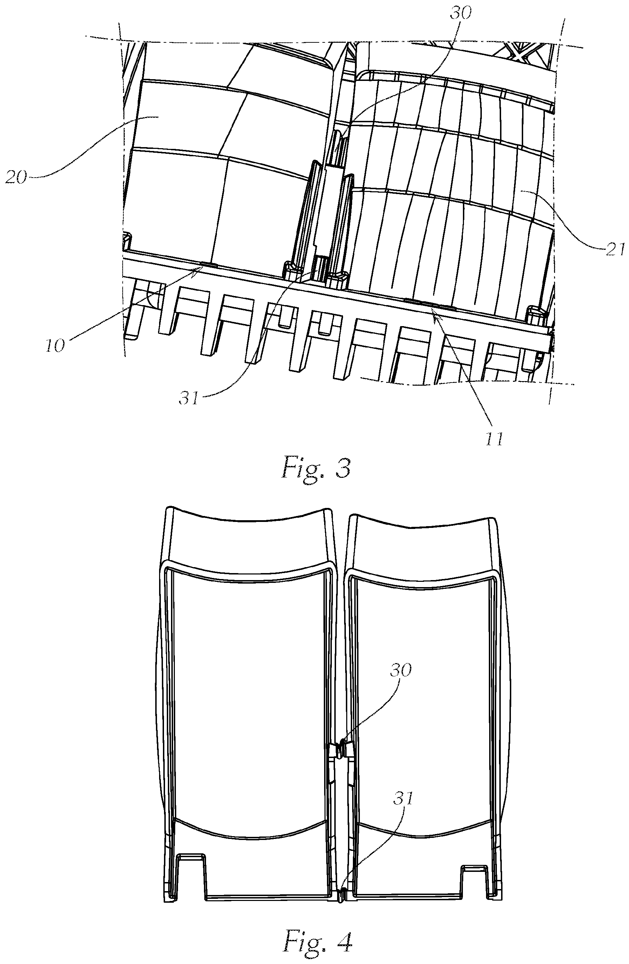

Die bewegliche Verbindung der beiden Reflektoren 20, 21 erfolgt mit Scharnieren 30, 31, wie dies insbesondere in den Figuren 3 - 5 gut zu erkennen ist. Bei der gezeigten Ausführungsform sind genau zweier Scharniere 30, 31 vorgesehen, welche in Einbaulage des Lichtmoduls 1 übereinander liegen.

Erfindungsgemäß wird ein Doppel- oder Mehrfachreflektor geschaffen, bei dem zumindest zwei Reflektoren beweglich, also flexibel miteinander verbunden sind, sodass zumindest diese beiden Reflektoren in einem gewissen Ausmaß unabhängig von einander positioniert und somit auch optimal zu den ihnen jeweils zugeordneten Lichtquellen referenziert werden können.

Die Scharniere sind als Filmscharniere 30, 31 ausgebildet.

Erfindungsgemäß sind die Scharniere 30, 31 einstückig mit den beiden Reflektoren 20, 21 ausgebildet. Von der Fertigung ist es dazu besonders günstig, wenn die Reflektoren und die Scharniere aus einem Kunststoff gebildet sind, sodass sich eine einfache einstückige Herstellung realisieren lässt und durch den Kunststoff eine entsprechende Flexibilität der Scharniere gegeben ist.

Zum Positionieren/Referenzieren der Reflektoren 20, 21 an der Platine 2 weisen die Reflektoren 20, 21 an ihren im befestigten Zustand der Platine 2 zugewandten Seiten Referenzierelemente 201; 211 auf. Dazu verfügen die Reflektoren 20, 21 vorzugsweise über einen Sockelbereich 20', 21', an welchem die Referenzierelemente 201; 211 angebracht, beispielsweise einstückig mit diesem ausgebildet sind.

Die Referenzierelemente 201; 211 der Reflektoren 20, 21 sind dabei als von den Reflektoren bzw. von den Reflektorsockeln 20', 21' abstehende Stifte 201; 211 ausgebildet.

Weiters sind an den Reflektorsockeln 20', 21' Befestigungsgelemente 200, 210 angebracht, vorzugsweise einstückig mit den Sockeln ausgebildet, mittels welchen die Reflektoren 20, 21 an der Platine 2 befestigt werden können.

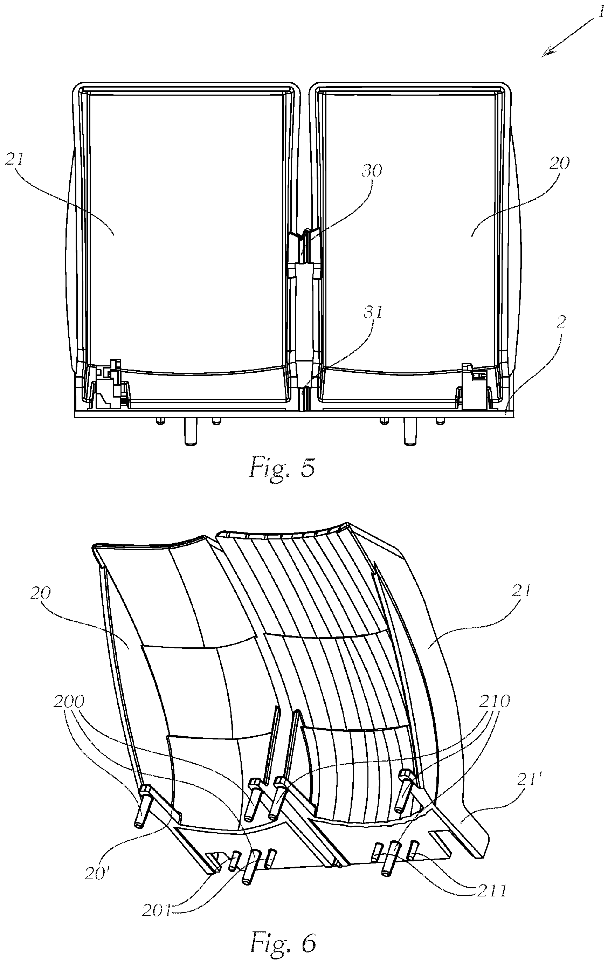

Die Referenzierelemente 201, 211 und Befestigungselemente 200, 210 sind dabei als von den Sockeln 20', 21' abstehende Stifte ausgebildet. Wie in Figur 6 gut zu erkennen ist, sind dabei bei der vorliegenden Ausführungsform die Stifte 200, 210 dicker ausgebildet als die Stifte 201, 211.

Mit den Refenzierstiften 201, 211 können die beiden Reflektoren 20, 21 des Doppelreflektors an der Platine 2 in der gewünschten Position referenziert werden.

Das Referenzsystem an der Trägerplatte bzw. Platine 2 wird dabei von Bohrungen, vorzugsweise Durchgangsbohrungen 2", 2''' in der Platine 2 gebildet, in welchen die Reflektoren 20, 21 mit ihren Referenzierstiften 201, 211 positioniert werden.

Bei einer konkreten Fertigungsmethode werden dabei vorerst die LED-Lichtquellen auf der Platine 2 angeordnet, deren Position (z.B. mittels optischer Vermessung) vermessen und anschließend werden die Referenzbohrungen 2", 2''' zum exakten Positionieren der Reflektoren 20, 21 bzw. deren Referenzierstiften 201, 211 erzeugt.

Die beiden Bohrungen 2''' sind dabei als Langlöcher ausgebildet, sodass ein Toleranzausgleich für einen ungenau gefertigten Reflektor möglich ist. Bei sehr genau gefertigtem Reflektor können aber auch die Bohrungen 2''' kreisrund ausgebildet sein.

Die Reflektoren 20, 21 bzw. deren reflektierende Flächen sind dabei vorzugsweise auf jene Referenzierstifte 201, 211, welche den kreisrunden, exakt an die Referenzierstifte angepassten Bohrungen 2" zugeordnet sind, abgestimmt.

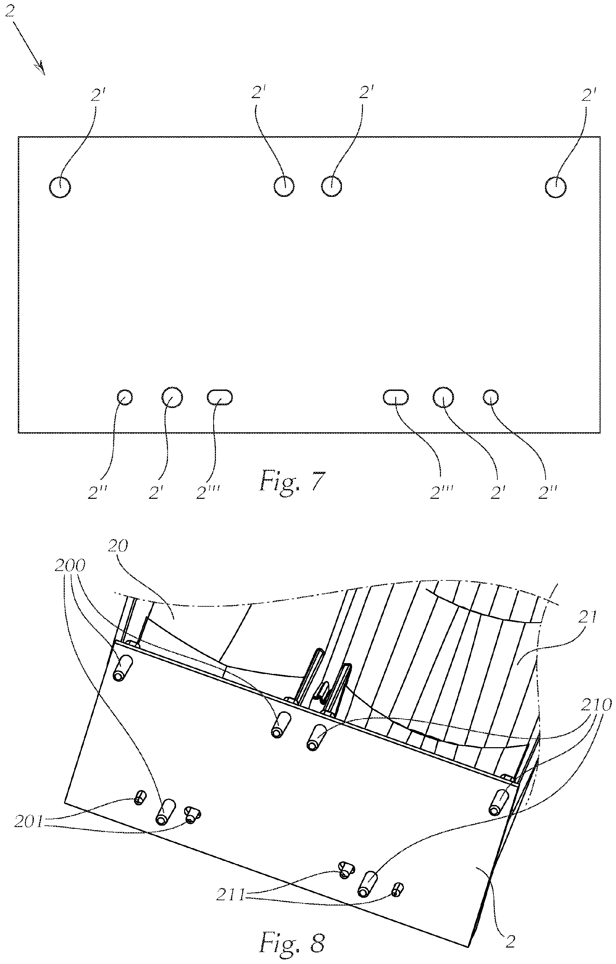

Die Bohrungen 2' in der Platine 2 sind den Befestigungsstiften 200, 210 der Reflektoren 20, 21 zugeordnet (siehe Figuren 7 und 8). Nachdem die Reflektoren in ihrer jeweils vorgesehenen Position eingesetzt sind, werden die Stifte 200 bzw. 210 in den Bohrungen 2' heiß verstemmt. Die Reflektoren sind somit an der für sie jeweils lichttechnisch optimalen Position fixiert.

Durch die bewegliche Verbindung der beiden Reflektoren 20, 21 wird es erst ermöglicht, dass beide Reflektoren, obwohl sie einstückig miteinander ausgebildet sind und somit eine Baueinheit bilden, in die für sie vorgesehenen Position gebracht werden können, was bei starr miteinander verbundenen Reflektoren nur in seltenen Ausnahmefällen möglich wäre.

Die Referenzbohrungen 2" sowie das Langloch 2''' sollten dabei möglichst genau mit dem Durchmesser der Referenzstifte 201, 211 zusammen passen. Die Bohrungen 2' können ohne weiteres einen etwas größeren Durchmesser aufweisen als die Stifte 200, 210. Durch die Heißverstemmung wird der Reflektor schließlich befestigt wie bei einer Nietverbindung, sodass ein größeres Spiel zwischen den Bohrungen 2' und den dicken Stiften 200, 210 (welche auch als Fügedome bezeichnet werden) unproblematisch ist.

Die Bohrungen 2", 2''' müssen dabei nicht zwingend den gleichen Normalabstand zu ihrer LED-Lichtquelle haben, da es gewollt sein kann, dass der Reflektor um die vertikale Achse leicht verdreht zur LED-Lichtquelle ausgerichtet ist.

Bei einer anderen, nicht dargestellten Ausführungsform kann auf die Bohrungen 2", 2''' sowie auf die Stifte 201, 211 verzichtet werden. Die Reflektoren werden mit den Stiften 200, 210 in den Bohrungen 2' eingesetzt, wobei diese Bohrungen 2' ausreichend groß sind, damit die Stifte 200, 210 geringfügig in der Ebene der Platine 2 verschoben und so die Reflektoren 20, 21 optimal positioniert werden können. Die unabhängige Verschiebung der Reflektoren, welche durch deren bewegliche Verbindung möglich wird, erfolgt solange, bis ein optimales Lichtbild erreicht wird. In dieser Position werden die Reflektoren fixiert, beispielsweise wieder durch heiß verstemmen der Stifte 200, 210.

Bei dieser Variante können die Reflektoren nach dem Einsetzen in den Träger und vor dem Fixieren noch in gewissem Ausmaß in ihrer Position eingestellt werden, soweit dies die flexible Verbindung zulässt.

Bei beiden Varianten gilt, dass die Referenzierung der Reflektoren in Bezug auf die Trägerplatte 2 erfolgt, auf welcher auch die LED-Lichtquellen angeordnet sind, sodass die Reflektoren de facto in Bezug auf die jeweils zugeordnete LED-Lichtquelle positioniert werden. Durch die bewegliche Verbindung der Reflektoren ist sicher gestellt, dass beide (alle) Reflektoren in Bezug auf deren LED-Lichtquelle wie vorgesehen positioniert werden können.

Die Platine selbst wird, wie schon erwähnt, üblicherweise noch vor dem Befestigen der Reflektoren auf dem Kühlkörper angebracht, etwa mit diesem verklebt. Damit für die Stifte an den Reflektoren ausreichend Platz ist, wird auch der Kühlkörper an den geeigneten Stellen mit Bohrungen versehen, wobei diese aber ohne weiteres größer als die Durchmesser der Stifte sein können, da die Bohrungen in dem Kühlkörper für das exakte Positionieren nicht maßgeblich sind.

Das Befestigen bzw. Fixieren der Reflektoren wurde in dem gezeigten Beispiel an Hand von Heißverstemmen dargestellt, es sind aber auch andere Methoden wie Verschrauben oder Warmumformen denkbar.

## Patentansprüche

1. Lichtmodul (1) für ein Kraftfahrzeug bzw. für einen Kraftfahrzeug-Scheinwerfer, wobei das Lichtmodul (1) zumindest zwei oder mehrere Lichtquellen (10, 11) aufweist, welche in definierten Positionen zueinander positioniert sind, und wobei das Lichtmodul (1) weiters zwei oder mehr Reflektoren (20, 21) aufweist, wobei jeder Lichtquelle (10, 11) zumindest ein Reflektor (20, 21) zugeordnet ist, wobei zumindest einer der Reflektoren (20, 21) mit zumindest einem benachbarten Reflektor (20, 21) beweglich verbunden ist, wobei die beweglich miteinander verbundenen Reflektoren (20, 21) mittels zumindest eines Scharnieres (30, 31) miteinander verbunden sind, das eine oder die mehreren Scharniere (30, 31) einstückig mit den Reflektoren (20, 21) ausgebildet ist/sind, und das eine oder die mehreren Scharniere (30, 31) als Filmscharniere ausgebildet sind,
**dadurch gekennzeichnet, dass**
die beweglich verbundenen Reflektoren unabhängig voneinander positioniert und zu der ihnen jeweils zugeordneten Lichtquelle referenziert werden können, und
die Lichtquellen (10, 11) LED-Lichtquellen sind, welche LED-Lichtquellen auf einer Trägerplatte (2) angeordnet sind, wobei die Reflektoren (20, 21) an ihren im befestigten Zustand der Trägerplatte (2) für die LED-Lichtquellen (10, 11) zugewandten Seiten Befestigungselemente (200; 210) und/oder Referenzierelemente (201; 211) aufweisen, mittels welchen die Reflektoren (20, 21) an korrespondierenden Befestigungselementen (2') beziehungsweise Referenzierelementen (2",2''') der Trägerplatte (2) positionierbar sind.

2. Lichtmodul nach Anspruch 1, **dadurch gekennzeichnet, dass** zumindest ein Reflektor mit allen benachbarten Reflektoren beweglich verbunden ist.

3. Lichtmodul nach Anspruch 1 oder 2, **dadurch gekennzeichnet, dass** jeder Reflektor (20, 21) mit seinen benachbarten Reflektoren (20, 21) beweglich verbunden ist.

4. Lichtmodul nach einem der Ansprüche 1 bis 3, **dadurch gekennzeichnet, dass** die zueinander beweglichen Reflektoren (20, 21) seitlich nebeneinander angeordnet sind.

5. Lichtmodul nach einem der Ansprüche 1 bis 4, **dadurch gekennzeichnet, dass** miteinander verbundene Reflektoren in einer Ebene zueinander beweglich angeordnet sind.

6. Lichtmodul nach Anspruch 5, **dadurch gekennzeichnet, dass** alle beweglichen Reflektoren in einer gemeinsamen Ebene beweglich gelagert sind.

7. Lichtmodul nach einem der Ansprüche 1 bis 6, **dadurch gekennzeichnet, dass** beweglich miteinander verbundene Reflektoren (20, 21) mittels zweier oder mehrerer, vorzugsweise mittels genau zweier Scharniere (30, 31) miteinander verbunden sind, wobei die zumindest zwei Scharniere (30, 31) zu einer Ebene, in welcher die Reflektoren (20, 21) zueinander beweglich sind, unterschiedliche Normalabstände aufweisen.

8. Lichtmodul nach einem der Ansprüche 1 bis 7, **dadurch gekennzeichnet, dass** das eine oder die mehreren Scharniere (30, 31) ein Kunststoffscharnier ist bzw. Kunststoffscharniere sind.

9. Lichtmodul nach einem der Ansprüche 1 bis 8, **dadurch gekennzeichnet, dass** die Reflektoren (20, 21) als Kunststoffreflektoren ausgebildet sind.

10. Lichtmodul nach einem der Ansprüche 1 bis 9, **dadurch gekennzeichnet, dass** jede LED-Lichtquelle (10, 11) ein oder mehrere Leuchtdioden umfasst.

11. Lichtmodul nach einem der Ansprüche 1 bis 10, **dadurch gekennzeichnet, dass** die Befestigungselemente (200; 210) und/oder Referenzierelemente (201; 211) der Reflektoren (20, 21) als abstehende Stifte ausgebildet sind.

12. Lichtmodul nach Anspruch 11, **dadurch gekennzeichnet, dass** die Befestigungselemente (2') und/oder Referenzierelemente (2", 2''') an der Trägerplatte (2) als zu den abstehenden Stiften korrespondierende Bohrungen ausgebildet sind.

13. Fahrzeugscheinwerfer mit einem oder mehreren Lichtmodulen nach einem der Ansprüche 1 bis 12.

## Claims

1. Light module (1) for a motor vehicle or for a motor vehicle headlamp, wherein the light module (1) has at least two or more light sources (10, 11), which are positioned relative to one another in defined positions, and wherein the light module (1) also has two or more reflectors (20, 21), wherein to each light source (10, 11) at least one of the reflectors (20, 21) is assigned, at least one of the reflectors (20, 21) being movably connected to at least one adjacent reflector (20, 21), wherein the reflectors (20, 21), which are movably connected to each other, are connected to each other by means of at least one hinge (30, 31), the hinge (s) (30, 31) being formed integrally with the reflectors (20, 21) and the hinge (s) (30, 31) being realized as film hinges (30, 31),
**characterized in that**
the movably connected reflectors are positioned independently of one another and can be referenced to the respective light source assigned to them, and
the light sources (10, 11) are LED light sources, which LED light sources are arranged on a carrier plate (2), wherein the reflectors (20, 21) on their sides facing the carrier plate (2) for the LED light sources (10, 11) in the assembled state have fixing elements (200; 210) and/or referencing elements (201; 211), by means of which the reflectors (20, 21) can be positioned on corresponding fixing elements (2') or referencing elements (2", 2''') of the carrier plate (2) .

2. Light module according to Claim 1,
**characterized in that**
at least one reflector is movably connected to all adjacent reflectors.

3. Light module according to Claim 1 or 2,
**characterized in that**
each reflector (20, 21) is movably connected to its adjacent reflectors (20, 21).

4. Light module according to any one of Claims 1 to 3,
**characterized in that**
the reflectors (20, 21) that are movable relative to each other are arranged side by side.

5. Light module according to any one of Claims 1 to 4,
**characterized in that**
reflectors that are connected to each other are movable relative to each other in a plane.

6. Light module according to Claim 5,
**characterized in that**
all movable reflectors are movably mounted in a common plane.

7. Light module according to any one of Claims 1 to 6,
**characterized in that**
reflectors (20, 21) that are movably connected to each other are connected to each other by means of two or more, preferably exactly two, hinges (30, 31), wherein the at least two hinges (30, 31) have different normal distances with respect to a plane in which the reflectors (20, 21) are movable with respect to each other.

8. Light module according to any one of Claims 1 to 7,
**characterized in that**
the one or the plurality of hinges (30, 31) is a plastic hinge or are plastic hinges.

9. Light module according to any one of Claims 1 to 8,
**characterized in that**
the reflectors (20, 21) are designed as plastic reflectors.

10. Light module according to any one of Claims 1 to 10,
**characterized in that**
each LED light source (10, 11) comprises one or more light-emitting diodes.

11. Light module according to any one of Claims 1 to 10,
**characterized in that**
the fixing elements (200; 210) and/or referencing elements (201; 211) of the reflectors (20, 21) are designed as protruding pins.

12. Light module according to Claim 11,
**characterized in that**
the fixing elements (2') and/or referencing elements (2", 2''') on the carrier plate (2) are designed as drilled holes corresponding to the protruding pins.

13. Vehicle headlamp having one or more light modules according to any one of Claims 1 to 12.

## Revendications

1. Module d'éclairage (1) pour un véhicule automobile ou pour un phare de véhicule automobile, le module d'éclairage (1) présentant au moins deux sources de lumière (10, 11), lesquelles sont positionnées l'une par rapport à l'autre dans des positions définies, et le module d'éclairage (1) présentant en outre au moins deux réflecteurs (20, 21), au moins un réflecteur étant associé à chaque source de lumière (10, 11), au moins l'un des réflecteurs (20, 21) étant relié de façon mobile à au moins un réflecteur adjacent (20, 21), les réflecteurs (20, 21) reliés l'un à l'autre de manière mobile étant reliés l'un à l'autre au moyen d'au moins une charnière (30, 31), la ou les charnières (30, 31) étant formée(s) d'un seul tenant avec les réflecteurs (20, 21), et la ou les charnières (30, 31) étant formée(s) en tant que charnières-films,
**caractérisé par le fait que**
les réflecteurs reliés de manière mobile sont positionnés indépendamment l'un à l'autre et peuvent être référencés par rapport à leur source de lumière associée respective, et
les sources de lumière (10, 11) sont des sources de lumière à LED, lesquelles sources de lumière à LED sont disposées sur une plaque support (2), les réflecteurs (20, 21) présentant sur leurs côtés tournés vers la plaque support (2) pour les sources de lumière à LED (10, 11), dans l'état fixé, des éléments de fixation (200 ; 210) et/ou des éléments de référence (201 ; 211) au moyen desquels les réflecteurs (20, 21) sont positionnables sur des éléments de fixation (2') respectivement des éléments de référence (2", 2''') correspondants de la plaque support (2).

2. Module d'éclairage selon la revendication 1, **caractérisé par le fait qu'**au moins un réflecteur est relié de manière mobile avec tous les réflecteurs adjacents.

3. Module d'éclairage selon l'une des revendications 1 ou 2, **caractérisé par le fait que** chaque réflecteur (20, 21) est relié de manière mobile avec ses réflecteurs adjacents (20, 21).

4. Module d'éclairage selon l'une des revendications 1 à 3, **caractérisé par le fait que** les réflecteurs (20, 21) mobiles l'un par rapport à l'autre sont disposés latéralement l'un à côté de l'autre.

5. Module d'éclairage selon l'une des revendications 1 à 4, **caractérisé par le fait que** des réflecteurs reliés l'un à l'autre sont disposés de manière mobile l'un par rapport à l'autre dans un plan.

6. Module d'éclairage selon la revendication 5, **caractérisé par le fait que** tous les réflecteurs mobiles sont montés de manière mobile sur un plan commun.

7. Module d'éclairage selon l'une des revendications 1 à 6, **caractérisé par le fait que** les réflecteurs reliés l'un à l'autre de manière mobile (20, 21) sont reliés l'un à l'autre au moyen d'au moins deux, de préférence au moyen d'exactement deux charnières (30, 31), les au moins deux charnières (30, 31) présentant des distances normales différentes par rapport à un plan dans lequel les réflecteurs (20, 21) sont mobiles l'un par rapport à l'autre.

8. Module d'éclairage selon l'une des revendications 1 à 7, **caractérisé par le fait que** la ou les charnières (30, 31) est ou sont une charnière en matière plastique, respectivement des charnières en matière plastique.

9. Module d'éclairage selon l'une des revendications 1 à 8, **caractérisé par le fait que** les réflecteurs (20, 21) sont formés en tant que réflecteurs en matière plastique.

10. Module d'éclairage selon l'une des revendications 1 à 9, **caractérisé par le fait que** chaque source de lumière à LED (10, 11) comporte une ou plusieurs diodes électroluminescentes.

11. Module d'éclairage selon l'une des revendications 1 à 10, **caractérisé par le fait que** les éléments de fixation (200 ; 210) et/ou les éléments de référence (201 ; 211) des réflecteurs (20, 21) sont formés en tant que broches faisant saillie.

12. Module d'éclairage selon la revendication 11, **caractérisé par le fait que** les éléments de fixation (2") et/ou les éléments de référence (2", 2''') sont formés sur la plaque support (2) en tant qu'alésages correspondant aux broches faisant saillie.

13. Phare de véhicule comportant un ou plusieurs modules d'éclairage selon l'une des revendications 1 à 12.
